# EUROPEAN PATENT APPLICATION

(11) **EP 4 629 540 A2**
(43) Date of publication of application: **08.10.2025**
(21) Application number: 25165876.1
(22) Date of filing: 25.03.2025
(51) Int. Cl.: H04L 1/1867

(54) **METHOD OF AUTONOMOUS REPEAT REQUEST ENHANCEMENT**

(30) Priority: 01.04.2024 US 202463572370 P; 11.03.2025 US 202519075807
(71) Applicant: Industrial Technology Research Institute, 310401 Hsinchu (TW)
(72) Inventor: Tsai, Tzu-Jane, 302 Zhubei City, Hsinchu County (TW); Chiu, Chun-Yuan, 900 Pingtung City, Pingtung County (TW)
(74) Representative: Becker Kurig & Partner Patentanwälte mbB

(57) **Abstract**

Methods of autonomous repeat request enhancement are provided. The method includes: determining whether a value of a countdown timer is less than a threshold; and in response to the value of the countdown timer being less than the threshold, performing a retransmission for a protocol data unit (PDU) if the PDU has not been acknowledged in a status report. Another method includes: determining whether a value of a countdown timer is less than a threshold; in response to the value of the countdown timer being less than the threshold, including a poll in a PDU; and transmitting the PDU. The other method includes: determining whether a value of a countdown timer is greater or equal to a threshold; and in response to the value of the countdown timer being less than the threshold, stopping performing a retransmission for a PDU if receiving a negative acknowledgement for the PDU.

## Description

### BACKGROUND

### Technical Field

The disclosure provides a method of autonomous repeat request (ARQ) enhancement.

### Description of Related Art

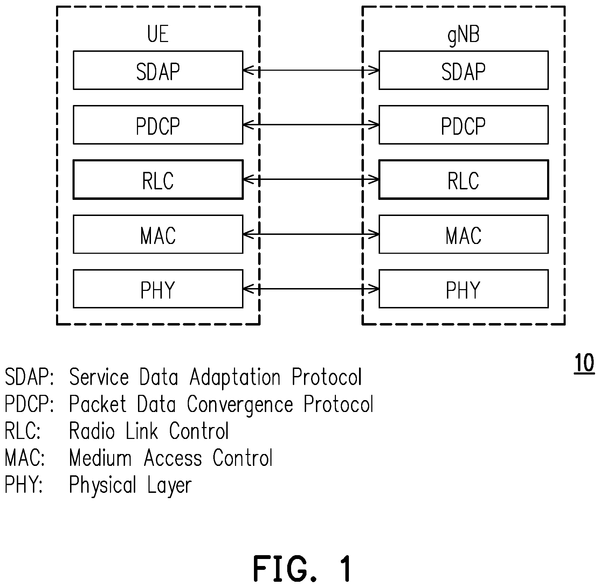

The radio link control (RLC) sublayer in the user plane protocol stack 10 of wireless communication systems, as shown in FIG. 1, provides critical functionality for data transmission. The RLC sublayer operates in three modes: transparent mode (TM), unacknowledged mode (UM), and acknowledged mode (AM). TM is for controlling protocol data unit (PDU). UM is for live streaming or real-time application where low latency is essential. AM is for reliable data transmission, such as file transfer protocol (FTP). AM may perform error correction through ARQ. While ARQ enhances reliability, the time needed for ARQ per RLC service data unit (SDU) may be up to several hundred milliseconds (e.g., 300ms). Emerging immersive and interactive extended reality (XR) applications demand exceptional user experiences, stringent latency and reliability are required. To meet these demands, ARQ mechanisms need to be enhanced with delay considerations.

### SUMMARY

The disclosure provides a method of ARQ enhancement. The method may perform timely retransmission on RLC layer and may avoid unnecessary RLC AM retransmissions.

The present disclosure is directed to a method of autonomous repeat request enhancement adapted to a radio link control (RLC) entity of a user equipment. The method includes: determining whether a value of a countdown timer is less than a threshold; and in response to the value of the countdown timer being less than the threshold, performing a retransmission for a protocol data unit (PDU) if the PDU has not been acknowledged in a status report.

The present disclosure is directed to a method of autonomous repeat request enhancement adapted to a radio link control entity of a user equipment. The method includes: determining whether a value of a countdown timer is less than a threshold; in response to the value of the countdown timer being less than the threshold, including a poll in a protocol data unit (PDU); and transmitting the PDU.

The present disclosure is directed to a method of autonomous repeat request enhancement adapted to a radio link control entity of a user equipment. The method includes: determining whether a value of a countdown timer is greater than or equal to a threshold; and in response to the value of the countdown timer being less than the threshold, stopping performing a retransmission for a protocol data unit (PDU) if receiving a negative acknowledgement for the PDU in a status report.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of user plane protocol stack.
FIG. 2 illustrates a schematic diagram of ARQ in RLC AM according to one embodiment of the present disclosure.
FIG. 3 illustrates a schematic diagram of triggering of a status report according to one embodiment of present disclosure.
FIG. 4 illustrates a schematic diagram of triggering of a retransmission according to one embodiment of the present disclosure.
FIG. 5 illustrates a schematic diagram of delay-based retransmission according to one embodiment of the present disclosure.
FIG. 6 illustrates a schematic diagram of enhanced retransmission according to one embodiment of the present disclosure.
FIG. 7 illustrates a schematic diagram of delay-based retransmission according to one embodiment of the present disclosure.
FIG. 8 illustrates a schematic diagram of delay-based retransmission according to one embodiment of the present disclosure.
FIG. 9 illustrates a schematic diagram of delay-based polling according to one embodiment of the present disclosure.
FIG. 10 illustrates a schematic diagram of enhanced polling according to one embodiment of the present disclosure.
FIG. 11 illustrates a schematic diagram of enhanced polling according to one embodiment of the present disclosure.
FIG. 12 illustrates a schematic diagram of timer-based status reporting according to one embodiment of the present disclosure.
FIG. 13 illustrates a schematic diagram of enhanced status reporting according to one embodiment of the present disclosure.
FIG. 14 illustrates a schematic diagram of enhanced status reporting according to one embodiment of the present disclosure.
FIG. 15 illustrates a schematic diagram of delay-based discard of RLC AM according to one embodiment of the present disclosure.
FIG. 16 illustrates a flowchart of a method of ARQ enhancement according to one embodiment of the present disclosure.
FIG. 17 illustrates a flowchart of a method of ARQ enhancement according to one embodiment of the present disclosure.
FIG. 18 illustrates a flowchart of a method of ARQ enhancement according to one embodiment of the present disclosure.
FIG. 19 illustrates a schematic diagram of a communication device according to one embodiment of the present disclosure.

### DESCRIPTION OF THE EMBODIMENTS

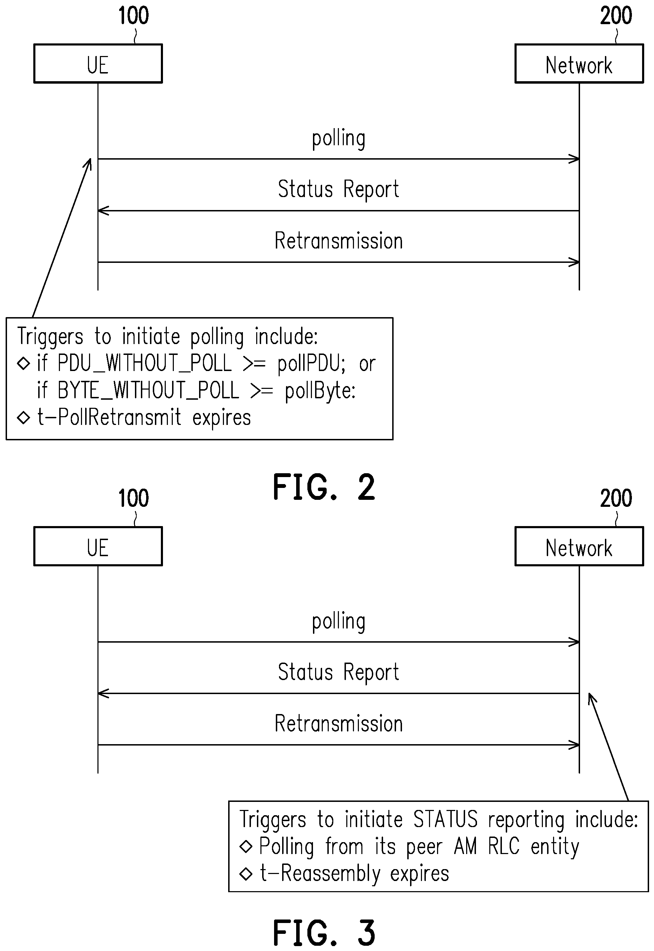

FIG. 2 illustrates a schematic diagram of ARQ in RLC AM according to one embodiment of the present disclosure. Regarding to uplink (UL) transmission, the user equipment (UE) 100 may transmit a poll to the network 200 (e.g., next generation radio access network (NG-RAN)). A poll may be triggered if the number of the transmitted PDUs since the most recent poll bit was transmitted (i.e., counter *PDU_WITHOUT_POLL*) is greater or equal to a threshold *pollPDU,* or the number of the transmitted bytes since the most recent poll bit was transmitted (i.e., counter *BYTE_WITHOUT_POLL*) is greater than or equal to a threshold *pollByte.* A poll may also be triggered if the timer *t-PollRetransmit* expires. The network 200 may perform status report for the UE 100 after receiving the poll. If the status report indicates that a retransmission is needed, the UE 100 may retransmit data to the network 200.

Upon notification of a transmission opportunity by lower layer, for each AM data (AMD) PDU submitted for transmission such that the AMD PDU contains either a not previously transmitted RLC SDU or an RLC SDU segment (e.g., the segment containing not previously transmitted byte segment), the transmitting side (e.g., UE 100) of an AM RLC entity shall: increment *PDU_WITHOUT_POLL* by one; and increment *BYTE_WITHOUT_POLL* by every new byte of Data field element that mapping to the Data field of the AMD PDU. If *PDU_WITHOUT_POLL ≥ pollPDU* or *BYTE_WITHOUT_POLL ≥ pollByte,* the transmitting side may include a poll in the AMD PDU. The counter *PDU_WITHOUT_POLL* is initially set to 0, and it counts the number of AMD PDUs sent since the most recent poll bit was transmitted. The counter *BYTE_WITHOUT_POLL* is initially set to 0, and it counts the number of data bytes sent since the most recent poll bit was transmitted.

To include a poll in an AMD PDU, the transmitting side of an AM RLC entity shall: set the P-field (i.e., poll field) of the AMD PDU to "1"; set *PDU_WITHOUT_POLL* to 0; and set *BYTE_WITHOUT_POLL* to 0. Upon submission of an AMD PDU including a poll to lower layer, the transmitting side of an AM RLC entity shall: if *t-PollRetransmit* is not running: start *t-PollRetransmit;* else restart *t-PollRetransmit.* Upon expiry of *t-PollRetransmit,* the transmitting side of an AM RLC entity shall: if both the transmission buffer and the retransmission buffer are empty (excluding transmitted RLC SDU or RLC SDU segment awaiting acknowledgements) or if no new RLC SDU or RLC SDU segment can be transmitted (e.g., due to window stalling), include a poll in an AMD PDU as described in clause 5.3.3.2 of TS 38.322.

FIG. 3 illustrates a schematic diagram of triggering of a status report according to one embodiment of present disclosure. The triggering for initializing status reporting may include: polling from the peer AM RLC entity; or the expiration of *t-PollRetransmit.* When generating a STATUS PDU, the AM RLC entity shall: for the RLC SDUs with serial number (SN) (parameter *RX_Next* ≤ SN ≤ parameter *RX_Highest_Status*) that has not been completely received yet, in increasing SN order of RLC SDUs and increasing byte segment order within RLC SDUs, starting with SN = *RX_Next* up to the point where the resulting STATUS PDU still fits to the total size of RLC PDU indicated by lower layer: for an RLC SDU for which no bytes segments have been received yet, include in the STATUS PDU a parameter *NACK_SN* which is set to the SN of the RLC SDU. When generating a STATUS PDU, the AM RLC entity shall: set the parameter *ACK_SN* to the SN of the next not received RLC SDU which is not indicated as missing in the resulting STATUS PDU.

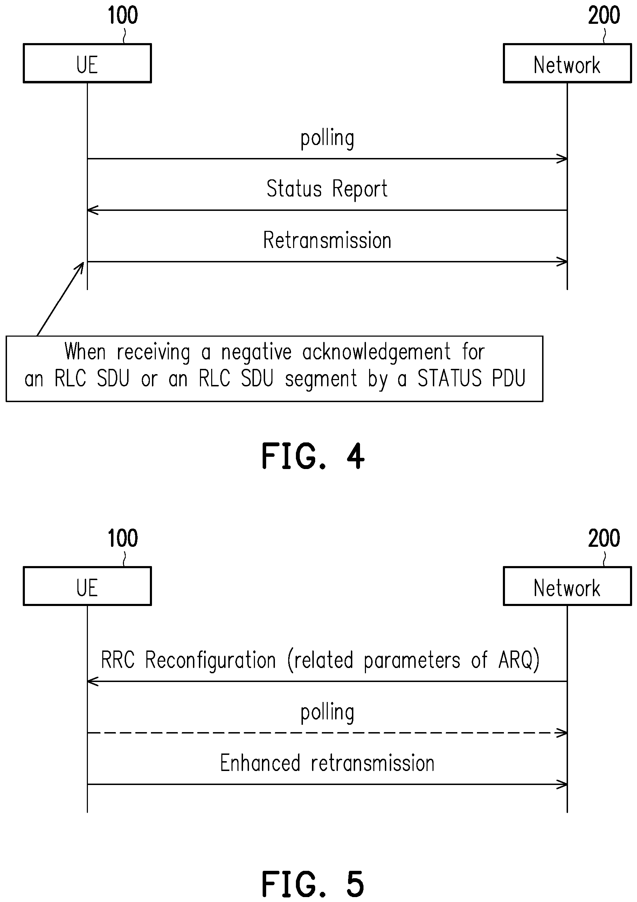

FIG. 4 illustrates a schematic diagram of triggering of a retransmission according to one embodiment of the present disclosure. When receiving a negative acknowledgement (NACK) for an RLC SDU or an RLC SDU segment by a STATUS PDU from a peer AM RLC entity, the transmitting side of the AM RLC entity shall: if the SN of the corresponding RLC SDU falls within the range parameter TX_Next_Ack ≤ SN ≤ the highest SN of the AMD PDU among the plurality of AMD PDUs submitted to lower layer, consider the RLC SDU or the RLC SDU segment for retransmission, wherein the RLC SDU or the RLC SDU segment correspond to a received negative acknowledgement. When an RLC SDU or RLC SDU segment is considered for retransmission, the transmitting side of the AM RLC entity shall: if the RLC SDU or RLC SDU segment is considered for retransmission for the first time, set the counter *RETX_COUNT* associated with the RLC SDU to zero; else, if the RLC SDU or RLC SDU segment that is considered for retransmission is not pending for retransmission already, increment the *RETX_COUNT;* and if *RETX_COUNT* = parameter *maxRetxThreshold,* indicate to upper layer that max retransmission has been reached. *RETX_COUNT* counts the number of retransmissions of an RLC SDU or RLC SDU segment as described in subclause 5.3.2 of TS 38.322. There is one *RETX_COUNT* counter maintained per RLC SDU.

When retransmitting an RLC SDU or RLC SDU segment, the transmitting side of an AM RKC entity shall: if needed, segment the RLC SDU or the RLC SDU segment; form a new AMD PDU which will fit within the total size of AMD PDU(s) indicated by lower layer at the particular transmission opportunity; and submit the new AMD PDU to lower layer. When forming a new AMD PDU, the transmitting side of an AM RLC entity shall: only map the original RLC SDU or RLC SDU segment to the Data field of the new AMD PDU; modify the header of the new AMD PDU in accordance with the description in subclause 6.2.2.4 of TS 38.322; and set the P field according to subclause 5.3.3 of TS 38.322.

SDU discard procedures: when indicated from upper layer (e.g., PDCP) to discard a particular RLC SDU, the transmitting side of an AM RLC entity or the transmitting UM RLC entity shall discard the indicated RLC SDU if neither the RLC SDU nor RLC SDU segment has been submitted to the lower layers. The transmitting side of an AM RLC entity shall not introduce an RLC SN gap when discarding an RLC SDU.

FIG. 5 illustrates a schematic diagram of delay-based retransmission according to one embodiment of the present disclosure. The transmitting side (e.g., UE 100) may perform autonomous retransmission for urgent data according to a new triggering manner. The RRC layer may control the retransmission procedure by transmitting an RRC reconfiguration message from the network 200 to the UE 100, wherein the RRC reconfiguration message may include a parameter *retransmission Time Threshold,* wherein *retransmission Time Threshold* is the threshold on delay time for retransmitting an AMD PDU. The transmitting side may perform an enhanced retransmission according to *retransmission Time Threshold.*

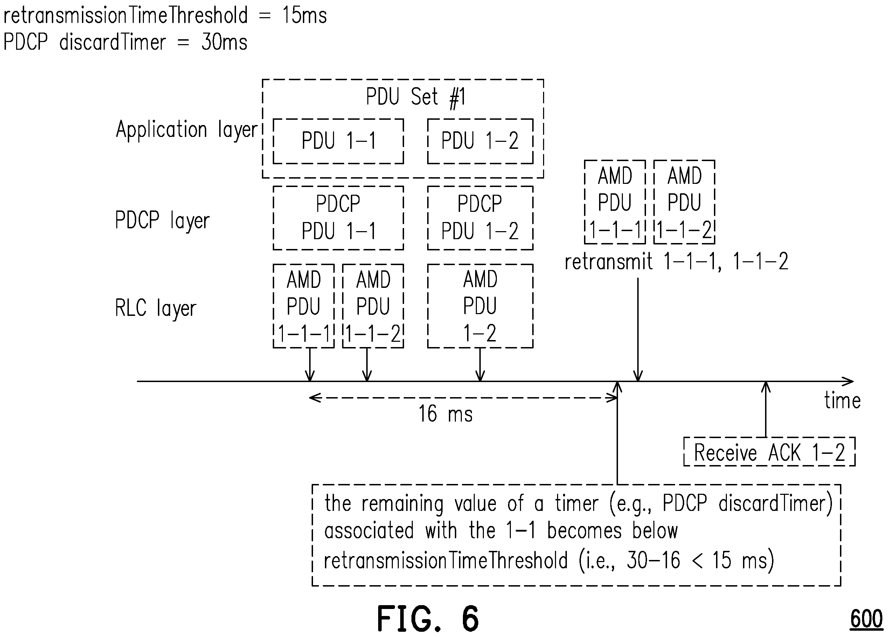

FIG. 6 illustrates a schematic diagram 600 of enhanced retransmission according to one embodiment of the present disclosure. An RLC entity of the transmitting side may determine whether a value of a countdown timer is less than a threshold. If the value of the countdown timer is less than the threshold and the PDU (or the transmitted data corresponding to the countdown timer) has not been acknowledged in a status report, the RLC entity may perform a retransmission for a PDU (e.g., AMD PDU) corresponding to the countdown timer. The counter timer may be started or reset when the PDU is obtained by the PDCP entity, wherein the PDCP entity is the entity operating as an upper layer of the RLC entity. For example, the countdown timer *PDCP discardTimer* corresponding to the PDU 1-1 may be started or reset when the PDU 1-1 is received by the PDCP entity. Assume that the PDCP PDU 1-1 is segmented to two AMD PDUs 1-1-1 and 1-1-2, the initial value of the *PDCP discardTimer* associated with the PDU 1-1 is 30ms, and the *retransmission Time Threshold* is 15ms. After the *PDCP discardTimer* starts 16ms, the RLC layer may determine that the remaining value of the *PDCP discardTimer* is 30-16 = 14ms. Since 14ms is less than *retransmission Time Threshold =* 15ms, the RLC layer may perform retransmission for the PDU 1-1-1 and PDU 1-1-2.

On the other hand, the countdown timer *PDCP discardTimer* corresponding to the PDU 1-2 may be started or reset when the PDU 1-2 is received by the PDCP entity. If the transmitting side receives an acknowledgement (ACK) of the PUD 1-2 before the remaining value of the *PDCP discardTimer* becoming the below *retransmission Time Threshold,* the RLC layer may not perform retransmission for the PDU 1-2.

In one embodiment, when receiving a negative acknowledgement for an RLC SDU or an RLC SDU segment by a STATUS PDU from its peer AM RLC entity, or when the remaining value of the timer (e.g., *PDCP discardTimer)* associated with the AMD PDU which has not been acknowledged in a status report becomes below *retransmittionTimeThreshold,* the transmitting side of the AM RLC entity shall: if the SN of the corresponding RLC PDU falls within the range TX_Next_Ack ≤ SN ≤ the highest SN of the AMD PDU among the AMD PDUs submitted to lower layer: consider the RLC SDU or the RLC SDU segment for which a negative acknowledgement was received or the remaining value of the timer (e.g., *PDCP discardTimer)* associated with the AMD PDU which has not been acknowledged in a status report becomes below *retransmission Time Threshold* for retransmission.

In one embodiment, the autonomous retransmission of the transmitting side may be triggered based on PDCP indication for corresponding AMD PDU. Specifically, assume that a PDU is submitted from a PDCP entity to an RLC entity. The RLC entity may receive an indication from the PDCP entity, and may perform the retransmission for the PDU according to the indication.

In one embodiment, when receiving a negative acknowledgement for an RLC SDU or an RLC SDU segment by a STATUS PDU from its peer AM RLC entity, or when indicated from upper layer (e.g., PDCP) to retransmit a particular RLC SDU or a particular RLC SDU segment which has not been acknowledged in a status report, the transmitting side of the AM RLC entity shall: if the SN of the corresponding RLC SDU falls within the range TX_Next_Ack ≤ SN ≤ the highest SN of the AMD PDU among the AMD PDUs submitted to lower layer: consider the RLC SDU or the RLC SDU segment for which a negative acknowledgement was received or the particular RLC SDU or the particular RLC SDU segment indicated from upper layer which has not been acknowledged in a status report for retransmission.

In one embodiment, when the *discardTimer* or *discarTimerForLowImportance* becomes below *retransmission Time Threshold* for a PDCP SDU, the transmitting PDCP entity shall indicate lower layers to retransmit the corresponding PDCP PDU if the PDCP PDU has already been submitted to lower layers.

In one embodiment, an RLC entity of the transmitting side may determine an importance of a PDU according to an importance identification (e.g., PDU set importance (PSI)) at the RLC layer, or the RLC entity may receive an importance indication from the PDCP layer. The RLC entity may perform PSI-based retransmission for the PDU if the importance of the PDU is high. It should be noted that, an identification of PSI of a PDU Set and determination of low/high importance PDU Set may be left up to the UE implementation.

In one embodiment, if a PDCP SDU is identified as a high-importance PDCP SDU, and if the corresponding PDCP Data PDU has already been submitted to lower layers, the importance identification (or importance indication) for the PDCP Data PDU is provided to lower layers.

In one embodiment, an identification of PSI of a PDU Set and determination of low/high importance PDU Set at RLC layer are left up to UE implementation.

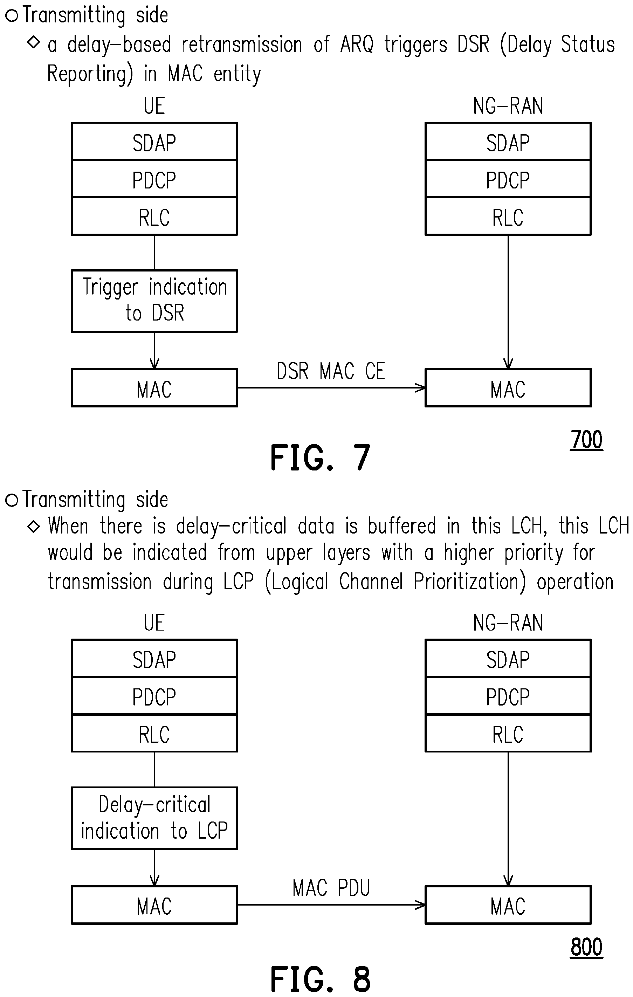

FIG. 7 illustrates a schematic diagram 700 of delay-based retransmission according to one embodiment of the present disclosure. A delay-based retransmission of ARQ may trigger delay status reporting (DSR) in MAC entity. The RLC entity may trigger the MAC entity to transmit the DSR. The DSR may be transmitted from the transmitting side (e.g., UE) to the receiving side (e.g., NG-RAN) via a media access control (MAC) control element (CE). In one embodiment, if *remainingTimeThreshold-r18 < retransmission Time Threshold* (scenario: 10ms < 15ms), a DSR may be triggered by delay-based retransmission. If *remainingTimeThreshold-r18* ≥ *retransmission Time Threshold* (scenario: 10ms = 10ms), a DSR may be triggered according to sub clause 5.4.9 in TS 38.321.

In one embodiment, if a logical channel group (LCG) is configured for delay status reporting, the MAC entity shall for each logical channel within the LCG: 1> if the smallest remaining value of the running *PDCP descardTimers* among all the PDCP SDUs buffered for the logical channel that has not been transmitted in any MAC PDU and have not been reported as data volume in a DSR MAC CE becomes below *remainingTimeThreshold* of the LCG, or if an LCG which has at least one logical channel (LCH) indicated from the associated RLC entity that delay-based retransmission occurs; and 1> if there is no DSR pending for the logical channel: 2> trigger a DSR for the logical channel.

FIG. 8 illustrates a schematic diagram 800 of delay-based retransmission according to one embodiment of the present disclosure. The transmitting side may determine whether an LCH buffer has delay-critical data, wherein the delay-critical data may be indicated from upper layers and the delay-critical data may use a configured higher priority for transmission of the LCH during logical channel prioritization (LCP) operation. For example, the RLC entity may transmit an indication to the LCH corresponding to the LCH buffer.

In one embodiment, the MAC entity shall, when a new transmission is performed: 1> allocate resources to the logical channels as follows: 2> if the logical channel is indicated that its logical channel buffer has delay-critical data (for example, from upper layer (i.e., RLC)), this logical channel is allocated resources first or with a configured higher logical channel priority (in decreasing priority order if there are more than one logical channels with delay-critical data).

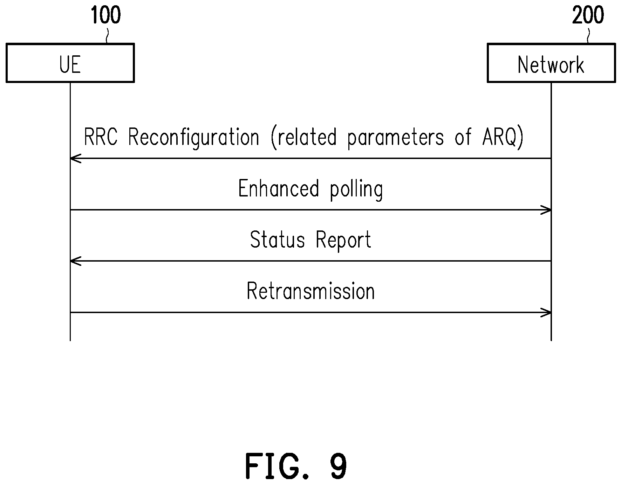

FIG. 9 illustrates a schematic diagram of delay-based polling according to one embodiment of the present disclosure. Besides the data-based triggering, the transmitting side (e.g., UE 100) may perform a delay-based triggering for polling according to a new triggering manner. The RRC layer may control the polling procedure by transmitting an RRC reconfiguration message from network 200 to the UE 100, wherein the RRC reconfiguration message may include parameters *pollDelay.* The parameter *pollDelay* is the threshold on delay time for including a poll in an AMD PDU. The variable *DELAY_WITHOUT_POLL* is a counter (or countdown timer) initially set to the configured or specified value, and *DELAY_WITHOUT_POLL* may be configured by the RRC reconfiguration message. *DELAY_WITHOUT_POLL* counts the amount of elapsed time since the most recent poll bit was transmitted. That is, the RLC entity of the transmitting side may reset *DELAY_WITHOUT_POLL* in response to a previous poll is transmitted from the transmitting side to the receiving side (e.g., network 200). The RLC entity may determine whether a value of the *DELAY_WITHOUT_POLL* is less than a threshold *pollDelay.* If the *DELAY_WITHOUT_POLL* is less than *pollDelay,* the RLC entity may include a pollin a PDU and transmit the PDU to the receiving side.

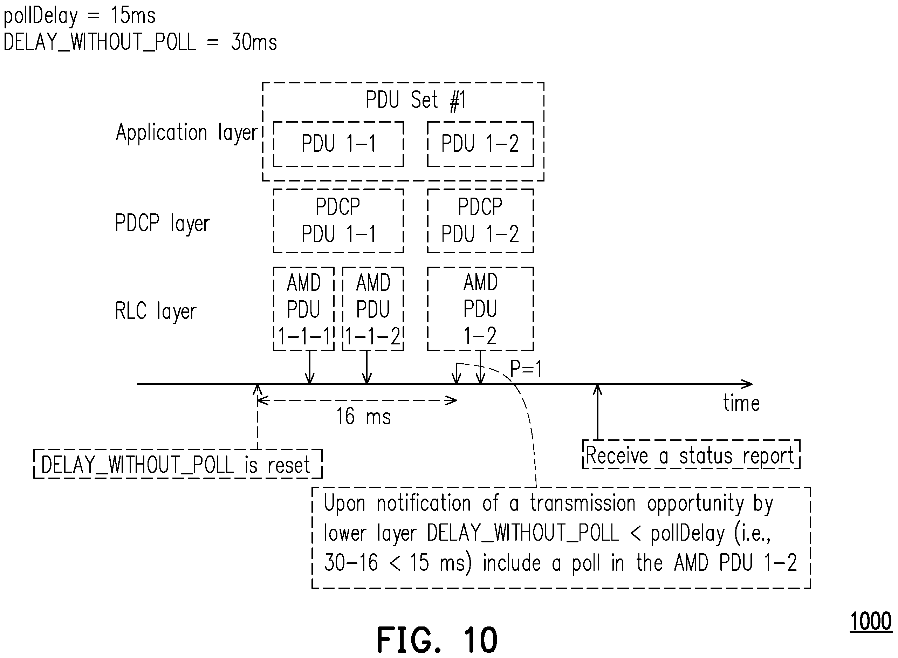

FIG. 10 illustrates a schematic diagram 1000 of enhanced polling according to one embodiment of the present disclosure. Assume that the initial value of *DELAY_WITHOUT_POLL* is 30ms and *pollDelay* is 15ms. The RLC layer may reset *DELAY_WITHOUT_POLL* in response to transmitting a poll. Upon notification of a transmission opportunity (e.g., transmission opportunity for AMD PDU 1-2) by the lower layer, if *DELAY_WITHOUT_POLL* (e.g., 30-16 = 14ms) *< pollDelay* (e.g., 15ms), the RLC layer may include a poll in the AMD PDU 1-2 and may transmit the AMD PDU 1-2 to the receiving side.

In one embodiment, to include a poll in an AMD PDU, the transmitting side of an AM RLC entity shall: set the P field of the AMD PDU to "1"; set *PDU_WITHOUT_POLL* to 0; set *BYTE_WITHOUT_POLL* to 0; and set *DELAY_WITHOUT_POLL* to DELAY_*WITHOUT_*POLL (e.g., a default value such as 30ms).

In one embodiment, upon notification of a transmission opportunity by lower layer, for each AMD PDU submitted for transmission such that the AMD PDU contains either a not previously transmitted RLC SDU or an RLC SDU segment containing not previously transmitted byte segment, the transmitting side of an AM RLC entity shall: decrease *DELAY_WITHOUT_POLL* by the time elapsed since *DELAY_WITHOUT_POLL* was last decreased; increment *PDU_WITHOUT_POLL* by one; increment *BYTE_WITHOUT_POLL* by every new byte of Data field element, such that *BYTE_WITHOUT_POLL* maps to the Data field of the AMD PDU; or if *DELAY_WITHOUT_POLL < pollDelay* (e.g., if the remaining time drop below a threshold), if *PDU_WITHOUT_POLL* ≥ *pollPDU,* or if *BYTE_WITHOUT_POLL* ≥ *pollByte,* include a poll in the AMD PDU.

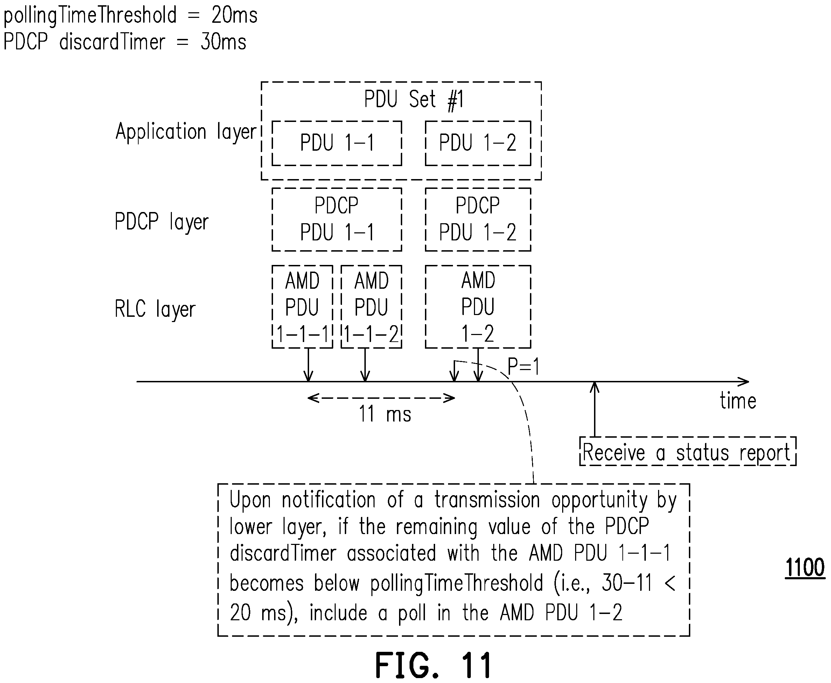

In one embodiment, the autonomous polling for urgent data may be triggered. FIG. 11 illustrates a schematic diagram 1100 of enhanced polling according to one embodiment of the present disclosure. The RRC layer may control the polling procedure by transmitting an RRC reconfiguration message from network 200 to the UE 100, wherein the RRC reconfiguration message may include the parameter *pollingTimeThreshold,* and *pollingTimeThreshold* is the threshold on delay time for polling. The counter timer may be started or reset when the PDU is obtained by the PDCP entity, wherein the PDCP entity is the entity operating as an upper layer of the RLC entity. If the countdown timer *PDCP discardTimer* is less than *pollingTimeThreshold,* the RLC entity may include a poll in a PDU and may transmit the PDU to the receiving side.

For example, the countdown timer *PDCP discardTimer* corresponding to the PDU 1-1 may be started or reset when the PDU 1-1 is received by the PDCP layer. Assume that the initial value of *PDCP discardTimer* associated with the PDU 1-1 is 30ms, and *pollingTimeThreshold* is 20ms. Upon notification of a transmission opportunity (e.g., transmission opportunity for AMD PDU 1-2) by the lower layer, if the remaining value of the PDCP *discardTimer* associated with the AMD PDU 1-1-1 (e.g., 30-11 = 19ms) *< pollingTimeThreshold* (e.g., 20ms), the RLC layer may include a poll in the AMD PDU 1-2 and may transmit the AMD PDU 1-2 to the receiving side.

In one embodiment, upon notification of a transmission opportunity by lower layer, for each AMD PDU submitted for transmission such that the AMD PDU contains either a not previously transmitted RLC SDU or an RLC SDU segment containing not previously transmitted byte segment, the transmitting side of an AM RLC entity shall: if at least one the remaining value of the timer (e.g., *PDCP discardTimer)* associated with the AMD PDU which ACK/NACK status has not been received becomes below *pollingTimeThreshold,* if *PDU_WITHOUT_POLL* ≥ *pollPUD,* or if *BYTE_WITHOUT_POLL* ≥ *pollByte,* include a poll in the AMD PDU.

In one embodiment, the polling of the transmitted side may be triggered based on a PDCP indication for corresponding AMD PDU. Specifically, assume that a PDU is submitted from a PDCP entity to an RLC entity. The RLC entity may receive an indication from the PDCP entity, and may include the poll in in a PDU and transmit the PDU to the receiving side.

In one embodiment, an RLC entity of the transmitting side may determine an importance of a PDU according to an importance identification (e.g., PSI) at the RLC layer, or the RLC entity may receive an importance indication from the PDCP layer. The RLC entity may perform PSI-based polling for the PDU if the importance of the PDU is high. That is, the RLC entity may include a poll in the PDU and transmitting the PDU to the receiving side. It should be noted that, an identification of PSI of a PDU Set and determination of low/high importance PDU Set may be left up to the UE implementation.

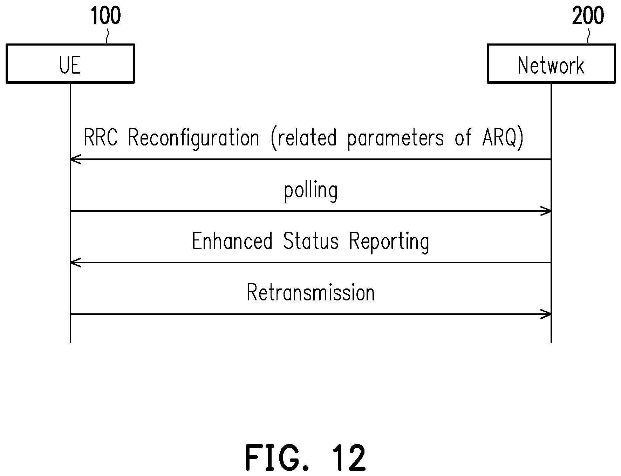

FIG. 12 illustrates a schematic diagram of timer-based status reporting according to one embodiment of the present disclosure. The receiving side (e.g., network 200) may perform timer-based status report after each default period, wherein the default period may be set based on the timer *T-ReassemblyForStatusReport* ::= ENUMBERATED{ms0, ms5, ms10, ms15, ms20, ms25, ms30, ms35, ms40, ms45, ms50, ms55, ms60, ms65, ms70, ms75, ms80, ms85, ms90, ms95, ms100, ms110, ms120, ms130, ms140, ms150, ms160, ms170, ms180, ms190, ms200, spare 1}.

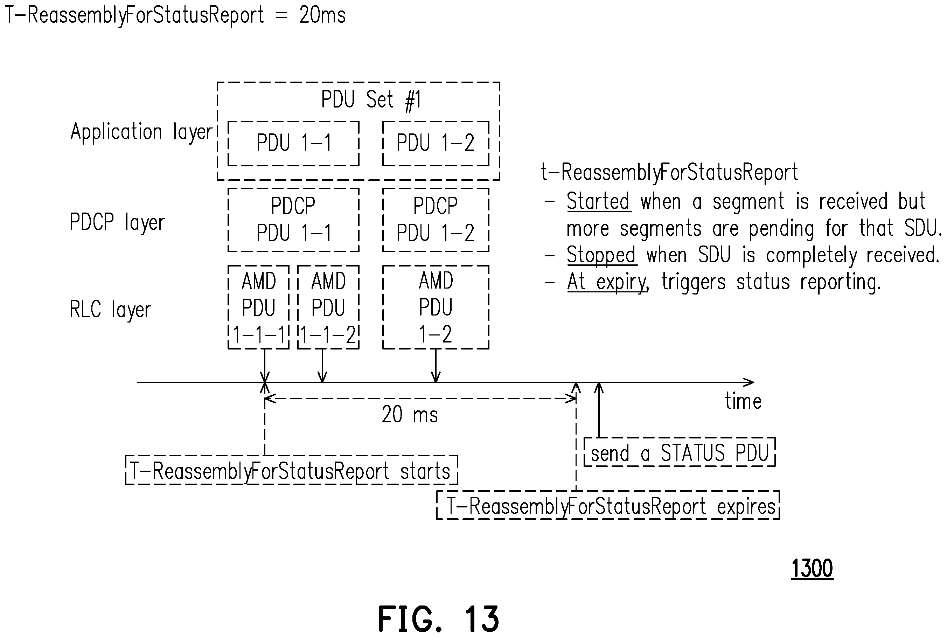

FIG. 13 illustrates a schematic diagram 1300 of enhanced status reporting according to one embodiment of the present disclosure. *T-ReassemblyForStatusReport* may be started when the first segment of an SDU is received by the RLC entity of the receiving side, wherein the SDU may include a plurality of pending segments. If *T-ReassemblyForStatusReport* does not expire, *T-ReassemblyForStatusReport* may be stopped when the SDU is completely received by the receiving side. However, if *T-ReassemblyForStatusReport* expires, the RLC entity of the receiving side may trigger status reporting.

Assume that *T-ReassemblyForStatusReport* is set to "20ms" and the segments (e.g., AMD PDU 1-1-1, AMD PDU 1-1-2 of the PDCP PDU 1-1) are submitted from the PDCP entity to the RLC entity at the transmitting side. The RLC entity of the receiving side may start T-*ReassemblyForStatusReport* in response to receiving the AMD PDU 1-1-1. After 20ms have passed (i.e., when *T-ReassemblyForStatusReport* expires), if one or more PDU segments corresponding to the PDCP PDU 1-1 are pending and have not yet been received by the receiving side, the RLC entity may transmit a status report for the pending PDU segments to the transmitting side (e.g., UE 100).

In one embodiment, triggers to initiate STATUS reporting include: polling from its peer AM RLC entity; and detection of reception failure of an AMD PDU: the receiving side of an AM RLC entity shall trigger a STATUS report when the timers *t-Reassembly* or *ReassemblyForStatusReport* expires.

In one embodiment, the RRC layer may control the ARQ procedure by reconfiguring the following parameter: *statusReportInterval:* the threshold of interval of status report for RLC AM, wherein *statusReportInterval* is reset to be the configured or specified value when the receiving side sends a status PDU. In one embodiment, *statusReportInterval* ::= ENUMBERATED {ms5, ms10, ms15, ms20, ms25, ms30, ms35, ms40, ms45, ms50, ms55, ms60, spare1}. *statusReportInterval* may be started when a Status PDU is transmitted. *statusReportInterval* may be stopped when next Status PDU is transmitted. Status reporting may be triggered when *statusReportInterval* expires.

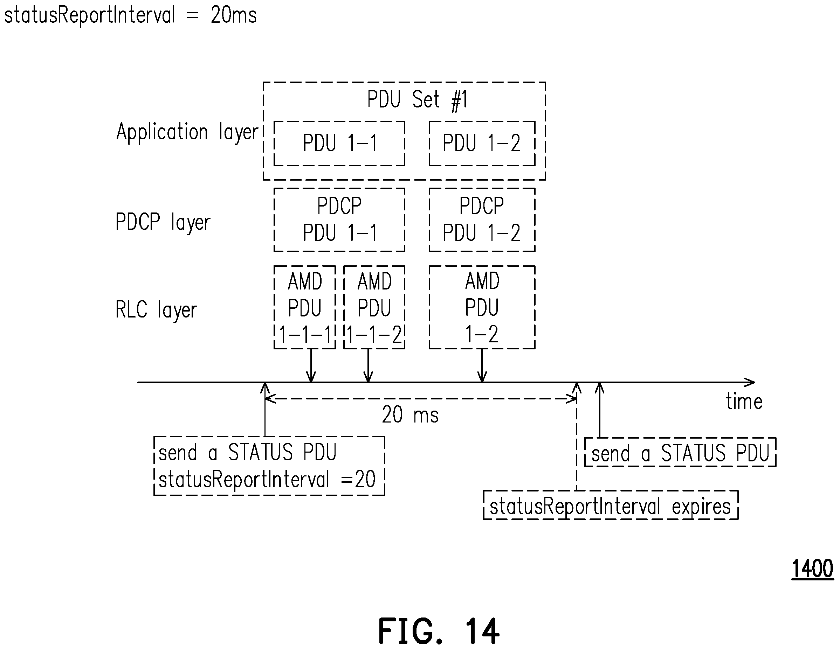

FIG. 14 illustrates a schematic diagram 1400 of enhanced status reporting according to one embodiment of the present disclosure. Assume that *statusReportInterval* is set to "20ms". 20ms after transmitting the first STATUS PDU (i.e., when *statusReportInterval* expires), the RLC entity of the receiving side may transmit the second STATUS PDU to the transmitting side.

In one embodiment, triggers to initiate STATUS reporting include: polling from its peer AM RLC entity; detection of reception failure of an AMD PDU: the receiving side of an AM RLC entity shall trigger a STATUS report when the timers *t-Reassembly* expires; and the receiving side of an AM RLC entity shall trigger a STATUS report when *statusReportInterval* expires.

In one embodiment, with regard to UL transmission, and hybrid automatic repeat request (HARQ) behavior of new radio (NR) UE, gNB may send a retransmission request. If gNB does not send retransmission request (i.e., downlink control information (DCI) 0_0/0_1 with new data indicator (NDI) not toggled) for a certain period of time (for configured grant (CG)), UE assumes that physical uplink shared channel (PUSCH) is successfully received and decoded by gNB. For configured grant, for an initial transmission by a UE of a transport block in a PUSCH configured by *ConfiguredGrantConfig,* if the UE receives a CG-downlink feedback information (DFI) that provides HARQ-ACK information for the transport block, the UE assumes that the transport block was correctly decoded if the HARQ-ACK information value is ACK; otherwise, the UE assumes that the transport block was not correctly decoded. With regard to maximum retransmission, 4 is total transmission time for MAC transport block (TB) (i.e., 1+3, then drop).

With regard to UE as transmitting side (i.e., UL transmission), a method is needed for UE's MAC entity to determine whether there is a HARQ residual error in a HARQ process. A new indicator may indicate that the gNB would like to give up the HARQ retransmission of a HARQ process. The new indicator may be carried in a new designed DL signal in physical (PHY) layer, be carried in a DCI for scheduling a new transmission for the HARQ process, or be carried in an existed DL signal in PHY (e.g., CG-DFI). After receiving the new indicator, UE's MAC entity shall consider that a HARQ residual error occurs in the HARQ process, and the MAC entity may notify the corresponding UE's RLC entity to speed up the ARQ retransmission.

In one embodiment, if the number of retransmission requests received from gNB exceeds the maximum retransmission number of HARQ operation, a retransmission indication from HARQ to ARQ is designed. When receiving a negative acknowledgement for an RLC SDU or an RLC SDU segment by a STATUS PDU from its peer AM RLC entity, or when receiving a retransmission indication for an RLC SDU or an RLC SDU segment from lower layers, the transmitting side of the AM RLC entity shall: if the SN of the corresponding RLC SDU falls within the range *TX_Next_ACK* ≤ SN ≤ the highest SN of the AMD PDU among the AMD PDUs submitted to lower layer: consider the RLC SDU or the RLC SDU segment for which a negative acknowledgement was received or a retransmission indication from lower layers was received for retransmission. It should be noted that, the retransmission indication for an RLC SDU or an RLC SDU segment from lower layers may be left up to UE implementation (e.g., the number of HARQ retransmission for a transport block which the RLC SDU or the RLC SDU segment included had reached the maximum retransmission number (e.g., 4)).

In one embodiment, the manner of the retransmission indication mentioned above is only applied to AMD PDU with high importance. An RLC entity of the transmitting side may determine an importance of a PDU according to an importance identification (e.g., PSI) at the RLC layer, or the RLC entity may receive an importance indication from the PDCP layer. If a PDCP PDU is identified as a high-importance PDCP SDU, and if the corresponding PDCP Data PDU has already been submitted to lower layers, the importance indication for the PDCP Data PDU is provided to lower layers. It should be noted that, an identification of PSI of a PDU set and determination of low/high importance PDU Set at PDCP layer or at RLC layer are left up to UE implementation.

With regard to UE as receiving side (i.e., DL transmission), if the number of HARQ NACK for a transport block exceeds the maximum retransmission threshold, an HARQ indication to ARQ is designed to trigger a status reporting.

In one embodiment, triggers to initiate STATUS reporting include: polling from its peer AM RLC entity; detection of reception failure of an AMD PDU: the receiving side of an AM RLC entity shall trigger a STATUS report when *t-Reassembly* expires; or HARQ indication. It should be noted that, the HARQ indication from lower layers may be left up to UE implementation (e.g., the number of HARQ NACK for a code block group (CBG) which the RLC SDU or the RLC SDU segment included had reached the maximum number of HARQ NACK (e.g., 4)).

In one embodiment, the manner of the HARQ indication mentioned above is only applied to AMD PDU with high importance. An RLC entity of the transmitting side may determine an importance of a PDU according to an importance identification (e.g., PSI) at the RLC layer, or the RLC entity may receive an importance indication from the PDCP layer. If a PDCP PDU is identified as a high-importance PDCP SDU, and if the corresponding PDCP Data PDU has already been submitted to lower layers, the importance indication (e.g., HARQ indication) for the PDCP Data PDU is provided to lower layers. It should be noted that, an identification of PSI of a PDU set and determination of low/high importance PDU Set at PDCP layer or at RLC layer are left up to UE implementation.

When indicated from upper layer (e.g., PDCP) to discard a particular RLC SDU, the transmitting side of an AM RLC entity or the transmitting UM RLC entity shall discard the indicated RLC SDU, if neither the RLC SDU nor a segment thereof has been submitted to the lower layers. If the data in the transmitting window is too old (i.e., the remaining value of the *PDCP discardTimer* is below a threshold), AM RLC entity can refuse to consider the data for retransmission. AM RLC entity may receive an indication from a PDCP entity, and stop performing the retransmission for the PDU according to the indication if receiving the negative acknowledgement for the PDU in the status report.

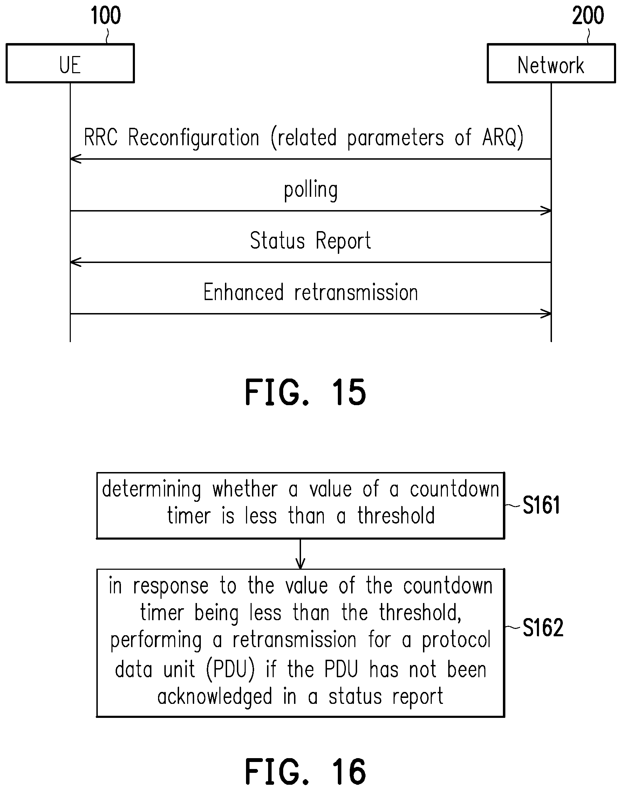

FIG. 15 illustrates a schematic diagram of delay-based discard of RLC AM according to one embodiment of the present disclosure. The RLC entity of the transmitting side (e.g., UE 100) may perform delay-based discard of RLC AM. Specifically, the transmitting side may determine whether a value of a countdown timer (e.g., *PDCP discardTimer)* is greater than or equal to a threshold (e.g., *earlyDiscardTimerForAMRLC:* the threshold on delay time for discarding an AMD PDU in a retransmission buffer). If the value of the countdown timer is less than the threshold, the RLC entity may discard a PDU in a retransmission buffer. If the value of the countdown timer is greater than or equal to the threshold and the RLC entity has receive a NACK for the PDU (or the PDU has not been acknowledged to the RLC entity), the RLC entity may perform the retransmission for the PDU in the retransmission buffer.

In one embodiment, when receiving a negative acknowledgement for an RLC SDU or an RLC SDU segment by a STATUS PDU from its peer AM RLC entity, the transmitting side of the AM RLC entity shall: if the SN of the corresponding RLC SDU falls within the range *TX_Next_ACK* ≤ SN ≤ the highest SN of the AMD PDU among the AMD PDUs submitted to lower layer and the remaining value of the timer (e.g., *PDCP discardTimer)* associated with the AMD PDU is above or equal to *earlyDiscardTimerForAMRLC*: consider the RLC SDU or the RLC SDU segment for which a negative acknowledgement was received for retransmission.

For an example, assume that discardTimer (i.e., the default value of the counter *discardTimer*) is configured as 50ms at PDCP entity, *earlyDiscardTimerForAMRLC* is configured as 15ms at AM RLC entity. When the remaining value of the *PDCP discardTimer* associated with the AMD PDU is above *earlyDiscardTimerForAMRLC,* that means this AMD PDU is still young and qualified to be considered for retransmission. The RLC entity may perform retransmission for the AMD PDU.

In one embodiment, discarding a PDU in a retransmission buffer of the transmitting side may be triggered based on PDCP indication for corresponding AMD PDU. Specifically, assume that a PDU is submitted from a PDCP entity to an RLC entity. The RLC entity may receive an indication from the PDCP entity, and may discard the PDU in a retransmission buffer according to the indication or may stop performing the retransmission for the PDU.

In one embodiment, when the *discardTimer* or *discarTimerForLowImportance* becomes below a threshold (e.g., *earlyDiscardTimerForAMRLC)* for a PDCP SDU, the transmitting PDCP entity shall indicate lower layers to discard the corresponding PDCP PDU in a retransmission buffer or to stop performing the retransmission for the PDU if the PDCP PDU has already been submitted to lower layers (or if a NACK for the PDU is received in the status report).

In one embodiment, the discarding of an AMD PDU may be triggered based on a parameter *psd-SetAMRLC* included in an RRC reconfiguration message transmitted from the receiving side (e.g., network 200) to the transmitting side (e.g., UE 100). If *psd-SetAMRLC* is set (e.g., is set to true), the transmitting side may perform PDU set based discarding for the AM RLC entity. If *psd-SetAMRLC* is not set or is set to false, the transmitting side may not perform PDU set based discarding for the AM RLC entity.

Specifically, assume that *psd-SetAMRLC* is set to true, and a PDU corresponding to a specific PDU set is submitted from a PDCP entity to an RLC entity. The RLC entity may receive an indication from the PDCP entity. The RLC entity may discard one or more PDUs (e.g., one or more PDUs corresponding to the same specific PDU set) in the retransmission buffer in response to the remaining value of the *PDCP discardTimer* associated with the AMD PDU being less than *earlyDiscardTimerForAMRLC.* Otherwise, the RLC entity may discard only the submitted PDU in the retransmission buffer if remaining value of the *PDCP discardTimer* being less than *earlyDiscardTimerForAMRLC.*

In one embodiment, an RLC entity of the transmitting side may determine an importance of a PDU according to an importance identification (e.g., PSI) at the RLC layer, or the RLC entity may receive an importance indication from the PDCP layer. The RLC entity may perform PSI-based discarding for the PDU if the importance of the PDU is low. That is, the RLC entity may discard the PDU in the retransmission buffer in response to the remaining value of the *PDCP discardTimer* associated with the AMD PDU being less than *earlyDiscardTimerForAMRLC* and the importance of the PDU is low. Otherwise, the RLC entity may perform retransmission for the PDU in the retransmission buffer in response to the remaining value of the *PDCP discardTimer* associated with the AMD PDU being greater than or equal to *earlyDiscardTimerForAMRLC* or the importance of the PDU is high.

In one embodiment, when receiving a negative acknowledgement for an RLC SDU or an RLC SDU segment by a STATUS PDU from its peer AM RLC entity, the transmitting side of the AM RLC entity shall: if the SN of the corresponding RLC SDU falls within the range *TX_Next_Ack* ≤ SN ≤ the highest SN of the AMD PDU among the AMD PDUs submitted to lower layer and the remaining value of the timer (e.g., *PDCP discardTimer)* associated with the AMD PDU is above or equal to *earlyDiscarTimerForAMRLC*: consider the RLC SDU or the RLC SDU segment for which a negative acknowledgement was received for retransmission; else if *pdu-SetAMRLC* is configured: consider all RLC SDUs or RLC SDU segments belonging to the PDU set to which the RLC SDU or RLC SDU segment belongs not for retransmission.

FIG. 16 illustrates a flowchart of a method of ARQ enhancement according to one embodiment of the present disclosure, wherein the method may be implemented by an RLC entity of a communication device (e.g., UE 100). In step S161, determining whether a value of a countdown timer is less than a threshold. In step S162, in response to the value of the countdown timer being less than the threshold, performing a retransmission for a protocol data unit (PDU) if the PDU has not been acknowledged in a status report.

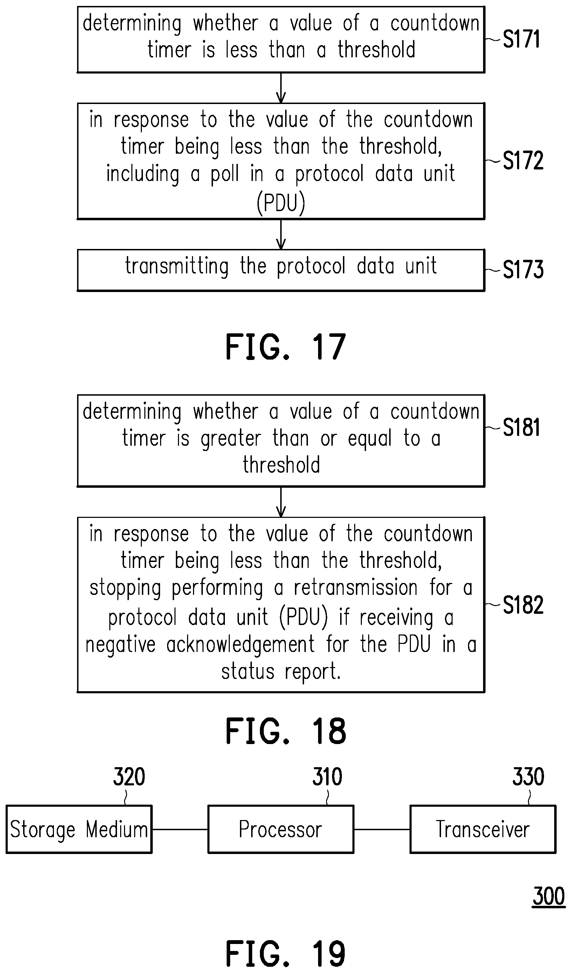

FIG. 17 illustrates a flowchart of a method of ARQ enhancement according to one embodiment of the present disclosure, wherein the method may be implemented by an RLC entity of a communication device (e.g., UE 100). In step S171, determining whether a value of a countdown timer is less than a threshold. In step S172, in response to the value of the countdown timer being less than the threshold, including a poll in a protocol data unit (PDU). In step S173, transmitting the protocol data unit.

FIG. 18 illustrates a flowchart of a method of ARQ enhancement according to one embodiment of the present disclosure, wherein the method may be implemented by an RLC entity of a communication device (e.g., UE 100). In step S181, determining whether a value of a countdown timer is greater than or equal to a threshold. In step S182, in response to the value of the countdown timer being less than the threshold, stopping performing a retransmission for a protocol data unit (PDU) if receiving a negative acknowledgement for the PDU in a status report.

FIG. 19 illustrates a schematic diagram of a communication device according to one embodiment of the present disclosure. The communication device 300 may include a processor 310, a storage medium 320, and a transceiver 330. The processor 310 is coupled to the storage medium 320 and the transceiver 330 and is configured to at least to implement the method as described in figures 1-18 as well as its exemplary embodiment and alternative variations. In one embodiment, the communication device may be implemented as the UE 100 or the network 200.

The processor 310 could be implemented by using programmable units such as a microprocessor, a micro-controller, a digital signal processor (DSP) chips, a field programmable gate array (FPGA), etc. The functions of the processor 310 may also be implemented with separate electronic devices or ICs. It should be noted that the functions of processor 310 may be implemented with either hardware or software.

The storage medium 320 may be, for example, any type of fixed or removable random access memory (RAM), a read-only memory (ROM), a flash memory, a hard disk drive (HDD), a solid state drive (SSD) or similar element, or a combination thereof, configured to record a plurality of modules or various applications executable by the processor 310.

The transceiver 330 may be configured to transmit and receive signals respectively in the radio frequency. The transceiver 330 may also perform operations such as low noise amplifying, impedance matching, frequency mixing, up or down frequency conversion, filtering, amplifying, and so forth. The transceiver 330 may include one or more digital-to-analog (D/A) converters or analog-to-digital (A/D) converters which are configured to convert from an analog signal format to a digital signal format during uplink signal processing and from a digital signal format to an analog signal format during downlink signal processing. The transceiver 330 may include an antenna array which may include one or multiple antennas to transmit and receive omni-directional antenna beams or directional antenna beams.

Based on the above, the disclosure may enhance the procedures (e.g., retransmission, polling, or status reporting) of the ARQ such that these procedures may be executed according to delay-based or timer-based events. On the other hand, the disclosure may avoid unnecessary RLC AM retransmissions for the obsolete PDUs.

## Claims

1. A method of autonomous repeat request enhancement, adapted to a radio link control, RLC, entity of a user equipment (100), comprising:
determining whether a value of a countdown timer is less than a threshold (S161); and
in response to the value of the countdown timer being less than the threshold, performing a retransmission for a protocol data unit, PDU, if the PDU has not been acknowledged in a status report (S162).

2. The method according to claim 1, wherein the step of performing the retransmission for the protocol data unit comprising:
receiving an indication from a packet data convergence protocol, PDCP, entity; and
performing the retransmission according to the indication.

3. The method according to claim 1, further comprising:
determining whether a logical channel buffer has delay-critical data; and
in response to the logical channel buffer has the delay-critical data, transmitting an indication to a logical channel corresponding to the logical channel buffer, wherein the logical channel obtains communication resources according to the indication.

4. The method according to claim 1, wherein the countdown timer corresponds to a transmitted data, wherein the transmitted data has not been acknowledged in a status report.

5. The method according to claim 1, wherein the countdown timer is started when the protocol data unit is obtained by a packet data convergence protocol, PDCP, entity, wherein the PDCP entity operates as an upper layer of the RLC entity.

6. The method according to claim 5, wherein the countdown timer comprises a PDCP *discardTimer.*

7. A method of autonomous repeat request enhancement, adapted to a radio link control entity of a user equipment (100), comprising:
determining whether a value of a countdown timer is less than a threshold (S171);
in response to the value of the countdown timer being less than the threshold, including a poll in a protocol data unit, PDU (S172); and
transmitting the PDU (S173).

8. The method according to claim 7, further comprising:
in response to transmitting the PDU including the poll, resetting the countdown timer.

9. The method according to claim 7, wherein the countdown timer corresponds to a transmitted data, wherein the transmitted data has not been acknowledged in a status report.

10. The method according to claim 7, wherein the countdown timer comprises a packet data convergence protocol, PDCP, *discardTimer.*

11. The method according to claim 7, wherein the step of including the poll in the protocol data unit comprising:
receiving an indication from a packet data convergence protocol entity; and
including the poll in the protocol data unit according to the indication.

12. A method of autonomous repeat request enhancement, adapted to a radio link control entity of a user equipment (100), comprising:
determining whether a value of a countdown timer is greater than or equal to a threshold (S181); and
in response to the value of the countdown timer being less than the threshold, stopping performing a retransmission for a protocol data unit, PDU, if receiving a negative acknowledgement for the PDU in a status report (S182).

13. The method according to claim 12, wherein the step of stopping performing the retransmission for the PDU if receiving the negative acknowledgement for the PDU in the status report comprising:
receiving an indication from a packet data convergence protocol, PDCP, entity; and
stopping performing the retransmission for the PDU according to the indication if receiving the negative acknowledgement for the PDU in the status report.

14. The method according to claim 12, wherein the countdown timer comprises a packet data convergence protocol, PDCP, *discardTimer.*

15. The method according to claim 14, further comprising:
in response to the value of the countdown timer being greater than or equal to the threshold, performing a retransmission for the PDU if the user equipment (100) receives a negative acknowledgement in a status report or has not been acknowledged in a status report.
